Europäisches Patentamt

European Patent Office

Office européen des brevets

(19)

(11) Veröffentlichungsnummer: **0 255 079 B1**

(12) **EUROPÄISCHE PATENTSCHRIFT**

(45) Veröffentlichungstag der Patentschrift: 09.10.91

(51) Int. Cl.5: **C09D 5/08**, C09C 3/12

(21) Anmeldenummer: 87110833.8

(22) Anmeldetag: 25.07.87

(54) **Als wässrige Kunstharzdispersionen vorliegende Lacke oder Grundierungen mit einem mineralischen Füllstoff.**

(30) Priorität: 01.08.86 DE 3626057

(43) Veröffentlichungstag der Anmeldung:
03.02.88 Patentblatt 88/05

(45) Bekanntmachung des Hinweises auf die
Patenterteilung:
09.10.91 Patentblatt 91/41

(84) Benannte Vertragsstaaten:
AT BE CH DE ES FR GB GR IT LI LU NL SE

(56) Entgegenhaltungen:
DE-A- 1 621 504
DE-A- 3 135 849
DE-A- 3 325 064
FR-A- 2 187 865
US-A- 4 038 456

(73) Patentinhaber: Quarzwerke GmbH
Kaskadenweg 40
W-5020 Frechen(DE)

(72) Erfinder: Grass, Wolfgang, Dipl.-Phys. Dr.
Am Vogelsang 9
W-4156 Willich 2(DE)
Erfinder: Merzbach, Hans-Dieter
Mohnweg 5
W-5000 Köln 40(DE)
Erfinder: Skudelny, Dieter, Dipl.-Ing.
Winandswiese 32
W-5020 Frechen(DE)

(74) Vertreter: Palgen, Peter, Dr. et al
Patentanwälte Kuborn & Dr. Palgen Mulvanystrasse 2
W-4000 Düsseldorf(DE)

## Beschreibung

Die Erfindung bezieht sich auf die Verwendung eines speziellen mineralischen Füllstoffs in Lacken oder Grundierungen gemäß Anspruch 1 bzw. auf Lacke oder Grundierungen nach dem Oberbegriff des Anspruchs 2.

Aus der DE-OS 16 21 504, Beispiel 3, geht ein VinylGrundanstrichmittel für Stahloberflächen hervor, welches dem Metall sehr gute Korrosionseigenschaften verleihen soll und in einem organische Lösungsmittel enthaltenden Bindemittel unbeschichteten Wollastonit neben anderen Füllstoffen enthält.

Aus der DE-OS 33 25 064 ist es bekannt, feinstteilige mineralische, gegen korrosionserzeugende Agenzien beständige Stoffe, die mit einer zwischen einem Bindemittel und dem Füllstoff haftungsvermittelnden Beschichtung versehen sind, als korrosionsschützende Füllstoffe in Lacken und Grundierungen zu verwenden. Ein solcher Füllstoff ist feinstgemahlener Wollastonit. Die Bindemittel sind in der DE-OS 33 25 064 lösungsmittelhaltige Harz-Systeme, und die Füllstoffe, insbesondere der Wollastonit, sind dementsprechend mit Epoxilan oberflächenbehandelt.

Wegen der gesundheitlichen Bedenklichkeit vieler in Lacken oder Grundierungen verwendeter organischer Lösungsmittel geht die Tendenz dahin, von derartigen Systemen Abstand zu nehmen.

Der Erfindung liegt die Aufgabe zugrunde, den Gedanken der Verwendung von beschichtetem Wollastonit als Füllstoff in Lacken und Grundierungen so auszugestalten, daß er auch bei als wäßrige Kunstharz-Dispersion vorliegenden Lacken realisierbar ist.

Diese Aufgabe wird erfindungsgemäß durch die in Anspruch 1 wiedergegebene Lehre gelöst.

Durch den Übergang auf eine wäßrige Suspension entfallen alle mit verdunstenden organischen Lösungsmitteln einhergehenden Probleme.

Das Aminosilan geht einerseits eine feste Verbindung mit dem Wollastonit ein und gibt andererseits nach außen hin eine als Amin sich darstellende Oberfläche ab. Diese ergibt eine gute Benetzung durch das Kunstharz-Bindemittel, und zwar sowohl in der wäßrigen Atmosphäre (Naßlack-Zustand) als auch im Trockenfilm-Zustand. Dadurch stellt sich eine hohe Sperrfähigkeit gegen korrosionserzeugende Agenzien ein und wird die passive Korrosionsschutzwirkung des Füllstoffs, d.h. der Barriereeffekt, besonders wirksam zur Geltung gebracht.

Ein überraschender zusätzlicher Effekt besteht darin, daß bei den in Betracht kommenden Füllgraden (Pigmentvolumenkonzentration (PVK) im Bereich von 20 bis 23 %) auch ohne entsprechende Hilfsmittel über mindestens mehrere Monate hinweg (bisheriger Beobachtungszeitraum) kein Absetzen der Füllstoffe eintritt. Dadurch kann die Zufügung der sonst üblichen Gelier- oder Verdickungsmittel entfallen, welche im fertigen Film häufig zu Störungen im Wasserhaushalt und damit zu einer Schwächung der Sperrwirkung gegen korrosionserzeugende Agenzien geführt haben.

Dank der hohen Stabilität gegen Absetzen können die Lacke bzw. Grundierungen ferner in der Verarbeitungskonsistenz geliefert werden. Es ist also nicht mehr erforderlich, für die Lagerung und Lieferung eine höhere Konsistenz einzustellen, um das Absetzen zu vermeiden, und erst kurz vor der Verarbeitung durch Zusatz von Verdünnungsmitteln die Verarbeitungskonsistenz herzustellen. Dies ist ein für die Praxis erheblicher Vorteil.

Die Erfindung verwirklicht sich außer in dem Gedanken der Verwendung des mit Aminosilan beschichteten Wollastonits auch in den so hergestellten Lacken oder Grundierungen und ist dann in der im Kennzeichen des Anspruchs 2 wiedergegebenen Zusammensetzung charakterisiert.

Das Zinkphosphat kann sich insbesondere in Spätphase der Korrosion als korrosionsverzögernd auswirken.

Bei den Versuchen wurde in der Anfangsphase festgestellt, daß die erfindungsgemäßen, aus Kunstharz-Dispersionen bestehenden Lacke oder Grundierungen beim Spritzen die Neigung hatten auszuflocken. Der Grund hierfür war vermutlich, daß die Dispersion durch die hohe Scherbeanspruchung beim Spritzen gebrochen wurde. Überraschenderweise wurde festgestellt, daß dieser Übelstand behoben werden kann, wenn den Lacken oder Grundierungen der Anteil von N-Methylpyrrolidon zugesetzt wird.

"Hilfsmittel" sollen Stoffe sein, die die Herstellung der Lacke bzw. Grundierungen sowie ihre Verarbeitbarkeit erleichtern, zum Beispiel Netzmittel und Entschäumer.

Für die Herstellung der erfindungsgemäßen Lacke oder Grundierungen empfiehlt sich die Verfahrensweise nach Anspruch 3.

In dem ersten Verfahrensschritt wird eine Dispergierung vorgenommen, um Zusatzstoffe wie Talkum und Zinkphosphat gut zu verteilen, wobei aber darauf geachtet werden muß, daß die Dispersion keinen Schaden nimmt. Die Dispergierung wird mit einer Teilmenge der Kunstharz-Dispersion vorgenommen, so daß die dispergierten Zusatzstoffe und Hilfsmittel schon in ihr späteres Milieu eingebracht sind. Zweckmäßig wird bei diesem Verfahrensschritt etwa die Hälfte der Kunstharz-Dispersion verwendet.

Die Hinzufügung des beschichteten Wollastonits in dem zweiten Verfahrensschritt erfordert keine vorherige Dispergierung. Diese sollte auch deshalb unterbleiben, weil sie für die Beschichtung des Wollastonits gefährlich sein kann. Der Wollastonit wird gleichmäßig eingerührt. In den Versuchen geschah dies, bis ein auf Polyesterfolie aufgegossener nasser Film im Durchlicht völlig homogen erschien, was leicht im Verlaufe weniger Minuten zu erreichen war.

In dem letzten Verfahrensschritt erfolgt das "Auflacken" bis zur Verarbeitungsreife. Zur Einstellung der gewünschten Verarbeitungsviskosität kann dabei noch der Zusatz kleiner Mengen voll-entsalzten Wassers erforderlich sein. Das N-Methylpyrrolidon kann in diesem Verfahrensschritt beigemischt werden.

Der erfindungsgemäß zu verwendende Wollastonit ist durch eisenfreie Vermahlung von natürlichem $\beta$-Wollastonit hergestellt. Die chemische Analyse ergibt folgende Anteile in Gewichts-%:

| | |
|---|---|
| $SiO_2$ | 51 |
| $Al_2O_3$ | 3 |
| $Fe_2O_3$ | 0,2 |
| $CaO + MgO$ | 43,0 |
| $Na_2O + K_2O$ | 0,2 |
| Glühverlust | 3,0 |

Das zur Beschichtung dienende Aminosilan hat die exakte Bezeichnung Gamma-Aminopropyltriäthoxysilan und die Formel

$$NH_2CH_2CH_2CH_2Si(OC_2H_5)_3$$

So beschichtete Wollastonitmehle werden von der Firma Quarzwerke GmbH in 5020 Frechen in verschiedenen Feinheitsgraden unter der Bezeichnung "Tremin 283" in den Handel gebracht. Zwei dieser Mehle sind wie folgt charakterisiert:

| Tremin 283 | 400 AST | 600 AST |
|---|---|---|
| **Sedimentationsanalysen** | | |
| **Sinkgeschwindig-keits-Äquivalent-Ø** | Gesamtrückstand in Gew.-% | |
| 25 µm | | |
| 16 | $3\overset{+}{-}2$ | |
| 10 | $\overline{13}$ | $3\overset{+}{-}2$ |
| 6,3 | 33 | 10 |
| 4 | 55 | 35 |
| 2,5 | 70 | 63 |
| **Spez. Oberfläche BET m²g (DIN 66132)** | 3 | 4 |
| **Ölzahl g/100 g (DIN 53199)** | 25 | 26 |
| **Schüttdichte g/cm³** | 0,65 | 0,58 |

Für die Versuche wurde als das Bindemittel bildende Kunstharz-Dispersion ein Acrylat-Styrol-Copolymer mit einem Festkörperanteil von 50 %, Rest Wasser verwendet, welches unter der Bezeichnung "Acronal DS 6000" (eingetragenes Warenzeichen der Firma BASF) im Handel ist.

Nachstehend werden zwei Ausführungsbeispiele beschrieben.

Beispiel 1

Bei dem Verfahrensschritt a) wurden folgende Bestandteile dispergiert:

| Bestandteil | Bezeichnung Hersteller | Gewichts-% von der fertigen Dispersion |
|---|---|---|
| Kunstharz-Dispersion | Acronal DS 6000 BASF,Ludwigshafen | 32,37 |
| Netzmittel | Colloperse 188 A Münzing Chemie, Heilbronn | 0,23 |
| Entschäumer | Nopco 8034 Münzing Chemie, Heilbronn | 0,23 |
| Talkum | Microtalc AT 1 Norwegian Talc, Bergen/Norwegen | 5,26 |
| Zinkphosphat | Zinkphosphat PZ 20 Société des Couleurs Zinciques, Aubervilliers/Frankreich | 5,79 |
| Eisenoxidpigment | Bayferox 110 Bayer AG | 0,74 |

Diese Zusammensetzung wurde unter dem Dissolver (Pendraulik) mit Zahnscheibe bei etwa 6 m/s Umfangsgeschwindigkeit über eine Dauer von 20 Minuten dispergiert.

In die Dispersion wurde in dem Verfahrensschritt b) langsam eingerührt

| mit Aminosilan beschichteter Wollastonit | Tremin 283-600 AST Quarzwerke GmbH | 16,18 |
|---|---|---|

Die sich ergebende Mischung wurde in einem Verfahrensschritt c) mit folgender Zusammensetzung versetzt:

| Kunststoff-Dispersion | Acronal DS 6000 BASF,Ludwigshafen | 32,21 |
|---|---|---|
| Entschäumer | Nopco NXZ Münzing Chemie, Heilbronn | 0,23 |
| Filmbildner N-Methylpyrrolidon | -- | 5,41 |
| Verdünnung Wasser,vollentsalzt | -- | 1,35 |

Diese Zusammensetzung stellt eine Rostschutz-Grundierung mit einer Pigmentvolumenkonzentration (PVK) von 23,0 % dar, deren Auslaufzeit im 4 mm DIN-Becher 55 Sekunden beträgt und die für Spritzauftrag (4 bar, 1,5 mm Düse) geeignet ist.

Mit dieser Rostschutzgrundierung wurden Versuche angestellt.

Bei Schichtdicken von 70 bis 80 μm beträgt die korrosive Unterwanderung am Schnitt 0 bis 0,5 mm nach Belastung mit 3 Zyklen Korrosionswechseltest (Prüfblatt 621-415, Verband der Automobilindustrie).

Flächenrost und Blasenbefall sind nicht zu beobachten.

Die Haftung erweist sich bei Anbringen eines Gitterschnittes nach DIN 53151, Verfahren B, und anschließendem Klebebandabriß mit Gto als sehr gut.

Bis zu Krümmungsradien von 2 mm hinunter (Dornbiegung nach DIN 53152) zeigt die Beschichtung eine fehlerfreie Flexibilität.

Nach mehreren Monaten ist keine erkennbare Sedimentation zu beobachten.

Beispiel 2

Dieses Beispiel entspricht im wesentlichen dem Beispiel 1 mit der Ausnahme, daß das Zinkphosphat weggelassen und dafür der Anteil an mit Aminosilan beschichtetem Wollastonit erhöht worden ist.

a)

4

| Kunststoff-Dispersion | Acronal DS 6000 BASF, Ludwigshafen | 32,32 |
|---|---|---|
| Netzmittel | Colloperse 188 A Münzing Chemie, Heilbronn | 0,23 |
| Entschäumer | Nopco 8034 E Münzing Chemie, Heilbronn | 0,23 |
| Talkum | Microtalc AT 1 Norwegian Talc, Bergen/Norwegen | 5,29 |
| Eisenoxidpigment | Bayferrox 110 Bayer AG | 0,73 |

b)

| mit Aminosilan beschichteter Wollastonit | Tremin 184-400 AST Quarzwerke GmbH | 22,11 |
|---|---|---|

c)

| Kunststoff-Dispersion | Acronal DS 6000 BASF,Ludwigshafen | 32,44 |
|---|---|---|
| Entschäumer | Nopco NXZ Münzing Chemie, Heilbronn | 0,24 |
| Filmbildner N-Methylpyrrolidon | -- | 5,13 |
| Verdünnung Wasser, vollentsalzt | -- | 1,28 |

Die Viskosität der so hergestellten Rostschutzgrundierung war durch eine Auslaufzeit von 60 Sekunden charakterisiert. Auch hier wurde bei 4 bar Spritzdruck in einer 1,5 mm Düse gespritzt.

Die Ergebnisse der geprüften Proben hinsichtlich Unterwanderung, Flächenrost und Flexibilität entsprachen im wesentlichen denen des Beispiels 1. Dies gilt auch hinsichtlich der überraschenden Stabilität gegen Sedimentation ohne Zusatz von Geliermitteln.

Ein Unterschied ist jedoch im Blasenbefall zu verzeichnen. Die Prüfung nach DIN 53209 ergab:

| Rezeptvariante | 1 Zyklus | 2 Zyklen | 3 Zyklen |
|---|---|---|---|
| Beispiel 1 | m2 g1 * | m0 g0 | m0 g0 |
| Beispiel 2 | m2 g2-3 * | m2 g2-3 * | m3 g2-3 ** |

\* = in einer Umgebung bis etwa 5 mm vom Schnitt
\*\* = in einer Umgebung bis etwa 10 mm vom Schnitt und auf der Fläche vereinzelt verstreut.

Die Versuche lassen erkennen, daß Zinkphosphat regulierend auf die spätere Korrosionsphase einwirkt, was daraus zu ersehen ist, daß der Blasenbefall in dem Zinkphosphat enthaltenden Beispiel 1 unterbunden ist.

**Patentansprüche**

1. Verwendung von feinstteiligem, mit einem Trialkoxyaminosilan der Formel

$$R''R'''N-(CH_2)_n-Si(OR')_3$$

worin
R' = Alkylgruppe, vorzugsweise $-CH_3$ oder $-C_2H_5$
R'',R''' = H oder ein organischer Rest einschließlich einer weiteren Aminogruppe
n = 1 bis 10, vorzugsweise 3
beschichtetem Wollastonit mit einer Teilchengröße unterhalb 25 $\mu$m als korrosionsschützender Füllstoff in als wäßrige Kunstharz-Dispersionen vorliegenden Lacken oder Grundierungen.

2. Als wäßrige Kunstharz-Dispersionen vorliegende Lacke oder Grundierungen mit einem feinstteiligen mineralischen Füllstoff, dadurch gekennzeichnet, daß sie aus

5

a) 62 bis 80 Gewichts-% einer wäßrigen Kunstharz-Dispersion;

b) 15 bis 25 Gewichts-% eines mit einem Trialkoxyaminosilan der Formel

$$R''R'''N\text{-}(CH_2)_n\text{-}Si(OR')_3$$

worin

R' = Alkylgruppe, vorzugsweise -$CH_3$ oder -$C_2H_5$

R'',R''' = H oder ein organischer Rest einschließlich einer weiteren Aminogruppe

n = 1 bis 10, vorzugsweise 3

beschichteten feinstteiligen Wollastonits mit einer Teilchengröße unterhalb 25 µm;

c) 4 bis 7 Gewichts-% Zinkphosphat;

d) 4 bis 7 Gewichts-% N-Methylpyrrolidon, und

e) Hilfsmittel und Wasser,

jeweils bezogen auf das Gesamtgewicht des fertigen Lacks bzw. der fertigen Grundierung, bestehen.

3. Verfahren zur Herstellung eines Lacks oder einer Grundierung gemäß Anspruch 2, dadurch gekennzeichnet, daß man eine Teilmenge der Kunstharz-Dispersion mit mindestens einem Teil der Zusatzstoffe und Hilfsmittel dispergiert, dann den beschichteten Wollastonit in die nach a) hergestellte Dispersion gleichmäßig einmischt und schließlich den Rest der Kunstharz-Dispersion und gegebenenfalls den Rest der Zusatzstoffe und Hilfsmittel und das Wasser dazugibt.

**Claims**

1. Use of very finely divided wollastonite coated with a trialkoxy aminosilane of the formula:

$$R''R'''N\text{-}(CH_2)_n\text{-}Si(OR')_3$$

where

R' = an alkyl group, preferably -$CH_3$ or -$C_2H_5$

R'', R''' = H or an organic radical including another amino group

n = 1 to 10, preferably 3

and having a particle size of less than 25 µm, as an anti-corrosion filler in varnishes or primers in the form of an aqueous synthetic resin dispersion.

2. Varnishes or primers in the form of an aqueous synthetic resin dispersion and having a very finely divided mineral filler, characterised in that they consist of:

a) 62 to 80 % by weight of an aqueous synthetic resin dispersion;

b) 15 to 25 % by weight of a very finely divided wollastonite coated with a trialhoxy aminosilane of the formula

$$R''R'''N\text{-}(CH_2)_n\text{-}Si(OR')_3$$

where

R' = an alkyl group, preferably -$CH_3$ or -$C_2H_5$

R'', R''' = H or an organic radical including another amino group

n = 1 to 10, preferably 3

and having a particle size less than 25 µm;

c) 4 to 7 % by weight of zinc phosphate;

d) 4 to 7 % by weight of N-methylpyrrolidone and

e) adjuvants and water,

each referred to the total weight of the finished varnish or primer.

3. A process for the preparation of a varnish or a primer according to claim 2, characterised in that a partial quantity of the synthetic resin dispersion is dispersed with at least a part of the additives and adjuvants, the coated wollastonite is then uniformly mixed into the dispersion prepared in accordance with a) and finally the rest of the synthetic resin dispersion and, where applicable, the rest of the additives and adjuvants and the water are added.

**Revendications**

1. Utilisation de wollastonite finement divisée, revêtue avec un trialcoxyaminosilane de formule :

   $R''R'''N-(CH_2)_n-Si(OR')_3$

   dans laquelle :
   R' = un groupe alkyle, de préférence $-CH_3$ ou $C_2H_5$,
   R", R''' = H ou un radical organique y compris un autre groupe amino,
   n = 1 à 10, de préférence 3,
   ayant une taille de particules inférieure à 25 μm, en tant que charge protectrice contre la corrosion, dans des vernis ou apprêts se trouvant sous forme de dispersions aqueuses de résines synthétiques.

2. Vernis ou apprêts se trouvant sous forme de dispersions aqueuses de résines synthétiques, comportant une charge minérale finement divisée, caractérisés en ce qu'ils consistent en :
   a) de 62 à 80 % en poids d'une dispersion aqueuse de résine synthétique,
   b) de 15 à 25 % en poids d'une wollastonite finement divisée, revêtue avec un trialcoxyaminosilane de formule :

   $R''R'''N-(CH_2)_n-Si(OR')_3$

   dans laquelle :
   R' = un groupe alkyle, de préférence $-CH_3$ ou $C_2H_5$,
   R", R''' = H ou un radical organique y compris un autre groupe amino,
   n = 1 à 10, de préférence 3 ;
   c) de 4 à 7 % en poids de phosphate de zinc
   d) de 4 à 7 % en poids de N-méthylpyrrolidone, et
   e) adjuvant et eau,
   chacun par rapport au poids total du vernis final ou de l'apprêt final.

3. Procédé pour la fabrication d'un vernis ou d'un apprêt selon la revendication 2, caractérisé en ce que l'on disperse une quantité partielle de la dispersion de résine synthétique avec au moins une partie des additifs et de l'adjuvant, on incorpore ensuite de façon homogène la Wollastonite revêtue dans la dispersion préparée selon a) et on y ajoute enfin le reste de la dispersion de résine synthétique et éventuellement le reste des additifs et de l'adjuvant et l'eau.